# EUROPEAN PATENT APPLICATION

(11) **EP 4 387 003 A1**
(43) Date of publication of application: **19.06.2024**
(21) Application number: 23196512.0
(22) Date of filing: 11.09.2023
(51) Int. Cl.: H01R 13/533, B62J 45/00, H01R 13/56, H01R 13/58

(54) **VEHICLE WIRE HARNESS AND STRADDLED VEHICLE INCLUDING THE SAME**

(30) Priority: 16.12.2022 JP 2022200903
(71) Applicant: Yamaha Hatsudoki Kabushiki Kaisha, Iwata-shi, Shizuoka 438-8501 (JP)
(72) Inventor: INOMATA, Yuki, Iwata-shi, Shizuoka-ken, 4388501 (JP); SUZUKI, Makoto, Iwata-shi, Shizuoka-ken, 4388501 (JP)
(74) Representative: Studio Torta S.p.A.

(57) **Abstract**

There is disclosed a vehicle wire harness (30) including a first terminal (51); a first electric wire (41) including a first tip portion (41a) having the first terminal (51) crimped thereto and a first middle portion (41b) contiguous to the first tip portion (41a); a connector (55) having a first insertion opening (56) opened in a first direction (X) formed therein, and having the first terminal (51) inserted thereto; and a first electric wire guide (61) located further in the first direction (X) than the first insertion opening (56) of the connector (55), the first electric wire guide (61) guiding the first middle portion (41b) of the first electric wire (41) such that the first middle portion (41b) extends in the first direction (X).

## Description

### 1. Technical field

The present invention relates to a vehicle wire harness and a straddled vehicle including the same.

### 2. Prior Art

Conventionally, a wire harness is used in a vehicle such as a straddled vehicle or the like (see, for example, Patent Literature 1 (JP2022-72967A)). A known wire harness includes an electric wire, a terminal crimped to a tip portion of the electric wire, and a connector having the terminal inserted thereto.

Patent Literature 1:JP2022-72967A

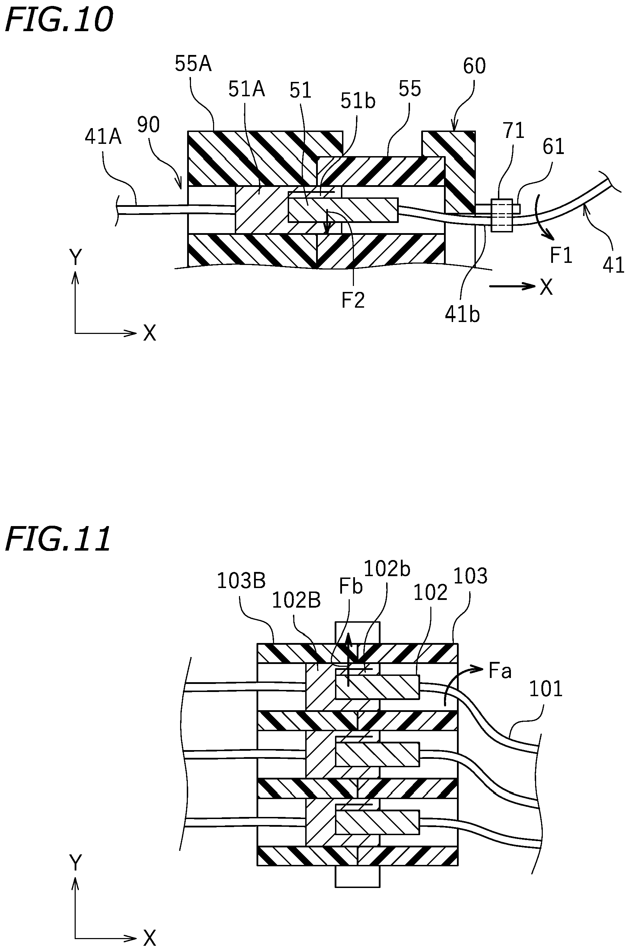

As schematically shown in FIG. 11, there may be a case where an electric wire 101 is sharply bent in the vicinity of a connector 103 in the case where the wire harness is installed at a certain position. In this case, a restoring force Fa against the bending is generated in the electric wire 101. Therefore, a terminal 102 crimped to a tip portion of the electric wire 101 receives a force Fb from the electric wire 101. In the case where the wire harness is connected with another wire harness, the terminal 102 is in contact with a terminal 102B of the another wire harness. A contact pressure is generated between the terminal 102 and the terminal 102B. Particularly in the case where the terminal 102B includes a folded portion (hereinafter, referred to as a "leaf spring portion") 102b, the leaf spring portion 102b exerts a spring force, and therefore, presses the terminal 102 strongly. When the terminal 102 receives the force Fb from the electric wire 101, the contact pressure received by the terminal 102 from the terminal 102B increases or decreases locally. As can be seen, when the electric wire 101 is sharply bent in the vicinity of the connector 103, the contact pressure on the terminal 102 may possibly increase or decrease.

The vehicle wire harness vibrates while the vehicle is running. There is a case where the contact pressure on the terminal 102 increases or decreases while the vehicle is running even though the pressure is favorable while the vehicle is at a stop. In order to connect the terminal 102 and the terminal 102B to each other favorably, it is preferred that the contact pressure on the terminal 102 is kept favorable even while the vehicle is running.

It is conceivable that a restriction is imposed on the position at which the wire harness may be installed such that the electric wire 101 is not bent in the vicinity of the connector 103. However, such a restriction imposed on the position of the wire harness results in poor convenience.

### Description of the invention

The present invention made in light of such a point has an object of providing a vehicle wire harness that hardly needs to be restricted regarding the position thereof and is capable of maintaining a favorable connection with another wire harness even while the vehicle is running, and a straddled vehicle including such a vehicle wire harness.

The vehicle wire harness disclosed herein includes a first terminal; a first electric wire including a first tip portion having the first terminal crimped thereto and a first middle portion contiguous to the first tip portion; a connector having a first insertion opening opened in a first direction formed therein, and having the first terminal inserted thereto; and a first electric wire guide located further in the first direction than the first insertion opening of the connector, the first electric wire guide guiding the first middle portion of the first electric wire such that the first middle portion extends in the first direction.

According to the above-described vehicle wire harness, even if the first electric wire is sharply bent in the vicinity of the connector, the first middle portion contiguous to the first tip portion is guided by the first electric wire guide to extend in the first direction. Therefore, the first terminal crimped to the first tip portion is unlikely to receive a force in a direction perpendicular to the first direction from the first electric wire. As a result, a contact pressure received by the first terminal from another terminal while the first termina is connected with the another terminal (hereinafter, such a pressure will be referred to as a "contact pressure on the first terminal") is kept favorable. The above-described vehicle wire harness maintains a favorable connection with another wire harness including the another terminal even while the vehicle is running. In addition, the above-described wire harness tolerates the bending of the first electric wire in the vicinity of the connector. Therefore, there is little need to restrict the position where the wire harness may be installed.

The connector may have a connection opening, opened in a direction opposite to the first direction, formed therein. The first terminal may be configured to overlap another terminal connected thereto via the connection opening, the first terminal overlapping the another terminal in a second direction perpendicular to the first direction.

With such a structure, the first terminal of the vehicle wire harness and the another terminal of the another vehicle wire harness overlap in the direction perpendicular to the first direction, and thus are electrically connected with each other. As described above, the first terminal is unlikely to receive a force in the direction perpendicular to the first direction from the first electric wire. This allows the contact pressure on the first terminal to be kept favorable.

The first electric wire guide may be configured to suppress movement of the first middle portion of the first electric wire in the second direction.

The connector may have a connection opening, opened in a direction opposite to the first direction, formed therein. The first terminal may include a leaf spring portion providing another terminal, connected thereto via the connection opening, with a pressing force in a direction perpendicular to the first direction.

The vehicle wire harness may further include a first band securing the first middle portion of the first electric wire to the first electric wire guide.

With such a structure, the first middle portion of the first electric wire is firmly secured to the first electric wire guide. This allows the contact pressure on the first terminal to be kept favorable.

The first electric wire guide may include a portion having an arc-shaped cross-section taken along a direction perpendicular to the first direction. The first electric wire guide may include a semicylindrical portion extending in the first direction.

With such a structure, the first electric wire guide guides the first middle portion of the first electric wire favorably.

The first electric wire guide may include a guide main body supporting the first middle portion of the first electric wire, and one or a plurality of ribs provided on the guide main body and extending in the first direction.

With such a structure, the rigidity of the first electric wire guide is increased. The first electric wire guide guides the first middle portion of the first electric wire favorably.

The size of the first terminal in a second direction perpendicular to the first direction may be shorter than the size of the first terminal in a third direction perpendicular to the first direction and the second direction. The first electric wire guide and the first middle portion of the first electric wire may be adjacent to each other in the second direction.

In the case where the size of a terminal in the second direction is shorter than the size of the terminal in the third direction, there is a tendency that when such a terminal receives a force in the second direction, the contact pressure on the terminal applied from another terminal is increased or decreased. However, in the above-described vehicle wire harness, the first electric wire guide and the first middle portion of the first electric wire are adjacent to each other in the second direction. Therefore, the force applied to the first middle portion in the second direction is received by the first electric wire guide. Thus, the first terminal is unlikely to receive the force in the second direction. This allows the contact pressure on the first terminal to be kept favorable.

The connector may have a second insertion opening opened in the first direction formed therein. The vehicle wire harness may further include a second terminal inserted into the second insertion opening, a second electric wire including a second tip portion having the second terminal crimped thereto and a second middle portion contiguous to the second tip portion), and a second electric wire guide located further in the first direction than the second insertion opening of the connector, the second electric wire guide guiding the second middle portion of the second electric wire such that the second middle portion extends in the first direction. The first electric wire guide and the first middle portion of the first electric wire may be adjacent to each other in a second direction perpendicular to the first direction. The second electric wire guide and the second middle portion of the second electric wire may be adjacent to each other in the second direction.

With such a structure, in the vehicle wire harness in which the first terminal and the second terminal are inserted into a single connector, the contact pressure on the first terminal and a contact pressure on the second terminal are kept favorable. Regarding the vehicle wire harness including the first electric wire and the second electric wire, the restriction on the position where the vehicle wire harness may be installed is alleviated, and a favorable connection with another vehicle wire harness while the vehicle is running is realized.

The vehicle wire harness may include a cover including the first electric wire guide, the cover being separate from the connector. The cover may be attached to the connector.

With such a structure, attaching the cover to the connector results in the first electric wire guide being located at an appropriate position.

The vehicle wire harness may include a cover including the first electric wire guide and the second electric wire guide, the cover being separate from the connector. The cover may be attached to the connector.

With such a structure, attaching the cover to the connector results in the first electric wire guide and the second electric wire guide being located at appropriate positions.

The first electric wire may have an outer diameter of 3 to 6 mm.

The straddled vehicle disclosed herein includes the above-described vehicle wire harness.

The straddled vehicle may include the above-described vehicle wire harness; and another vehicle wire harness including another terminal, another electric wire having the another terminal crimped thereto, and another connector having the another terminal inserted thereto. The connector may have a connection opening, opened in a direction opposite to the first direction, formed therein. The another terminal may be connected with the first terminal via the connection opening by the connector and the another connector being connected with each other. The first terminal and the another terminal may overlap each other in a second direction perpendicular to the first direction.

The first electric wire guide may be configured to suppress movement of the first middle portion of the first electric wire in the second direction.

The straddled vehicle may further include a controller, a motor, and a power supply circuit connecting the controller and the motor to each other. The vehicle wire harness may be included in the power supply circuit.

The straddled vehicle may be a motorcycle.

The present invention provides a vehicle wire harness that hardly needs to be restricted regarding the position thereof and is capable of maintaining a favorable connection with another wire harness even while the vehicle is running, and a straddled vehicle including such a vehicle wire harness.

### Brief description of the drawings

FIG. 1 is a side view of a motorcycle according to an embodiment of the present invention.
FIG. 2 is a circuit configuration of a power supply circuit included in the motorcycle.
FIG. 3 is a perspective view of a first electric wire and a first terminal.
FIG. 4 is a perspective view of a connector.
FIG. 5 is a perspective view of a cover.
FIG. 6 is a plan view of the cover.
FIG. 7 is a cross-sectional view of FIG. 6 taken along line VII-VII in FIG. 6.
FIG. 8 is a perspective view of a part of a wire harness.
FIG. 9 is a cross-sectional view showing a part of a wire harness including no cover.
FIG. 10 is a cross-sectional view showing a part of the wire harness according to the embodiment.
FIG. 11 is a cross-sectional view showing a part of a conventional wire harness.

### Embodiments of the invention

Hereinafter, an embodiment of a vehicle wire harness and a straddled vehicle including the same will be described with reference to the drawings.

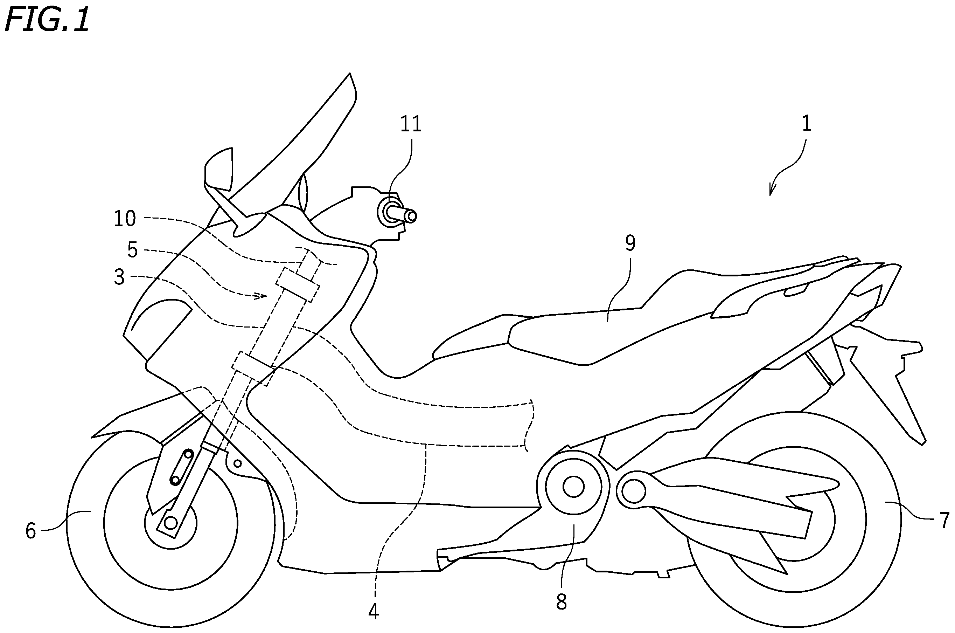

FIG. 1 is a side view of a motorcycle 1 as an example of a straddled vehicle. The motorcycle 1 includes a vehicle frame 5, a seat 9 on which a rider sits, a front wheel 6, a rear wheel 7, an internal combustion engine 8 as an example of a driving source for running, and a handle 11. The vehicle frame 5 includes a head pipe 3, and a main frame 4 extending rearward from the head pipe 3. A steering shaft 10 is supported by the head pipe 3 so as to be rotatable leftward and rightward. The handle 11 is connected with the steering shaft 10.

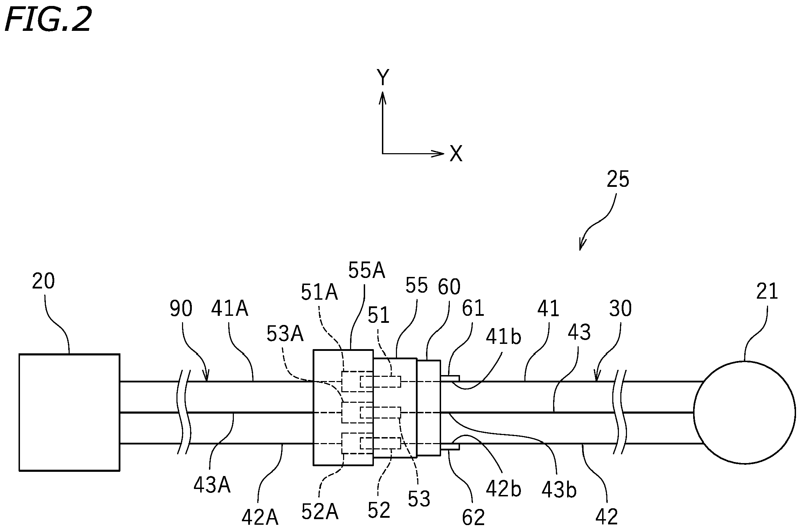

As shown in FIG. 2, the motorcycle 1 includes a controller 20 connected with a battery (not shown), a motor 21, and a power supply circuit 25 connecting the controller 20 and the motor 21 to each other. The power supply circuit 25 supplies electric power from the controller 20 to the motor 21.

The power supply circuit 25 includes a wire harness 90 and a wire harness 30 connected with the wire harness 90. The wire harness 90 is directly or indirectly connected with the controller 20. The wire harness 30 is directly or indirectly connected with the motor 21.

The wire harness 90 includes an electric wire 41A, an electric wire 42A, an electric wire 43A, a terminal 51A crimped to the electric wire 41A, a terminal 52A crimped to the electric wire 42A, a terminal 53A crimped to the electric wire 43A, and a connector 55A having the terminals 51A through 53A inserted thereto.

Now, the wire harness 30 will be described in detail. The wire harness 30 includes a first electric wire 41, a second electric wire 42 and a third electric wire 43. The wire harness 30 includes a first terminal 51 crimped to the first electric wire 41, a second terminal 52 crimped to the second electric wire 42, and a third terminal 53 crimped to the third electric wire 43. The wire harness 30 includes a connector 55 having the first terminal 51, the second terminal 52 and the third terminal 53 inserted thereto, and a cover 60 attached to the connector 55.

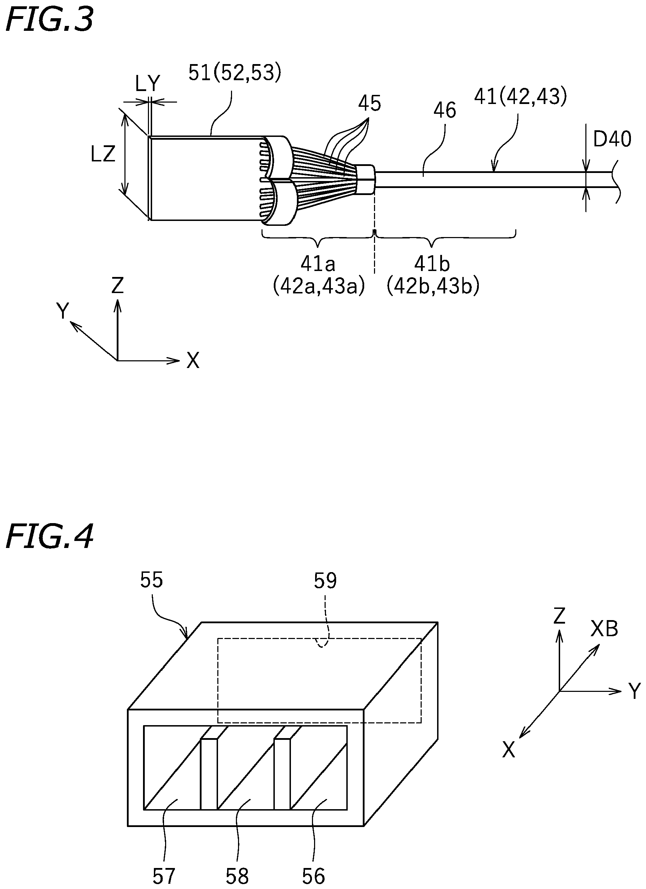

FIG. 3 is a perspective view of the first electric wire 41 and the first terminal 51. The first electric wire 41 includes a plurality of core wires 45 formed of a conductive material such as a metal material or the like, and a cylindrical covering member 46 surrounding the core wires 45. The covering member 46 is formed of an insulating material such as a resin or the like. The second electric wire 42 and the third electric wire 43 each have substantially the same structure as that of the first electric wire 41. It should be noted that there is no specific limitation on the structure of the first electric wire 41, the second electric wire 42 or the third electric wire 43. There is no specific limitation on the size of the first electric wire 41, the second electric wire 42 or the third electric wire 43, either. Herein, the first electric wire 41, the second electric wire 42 and the third electric wire 43 each have an outer diameter D40 of 3 to 6 mm.

The first electric wire 41 includes a first tip portion 41a having the first terminal 51 crimped thereto, and a first middle portion 41b contiguous to the first tip portion 41a. The second electric wire 42 includes a second tip portion 42a having the second terminal 52 crimped thereto, and a second middle portion 42b contiguous to the second tip portion 42a. The third electric wire 43 includes a third tip portion 43a having the third terminal 53 crimped thereto, and a third middle portion 43b contiguous to the third tip portion 43a. The first middle portion 41b, the second middle portion 42b and the third middle portion 43b each have a length of, for example, 3 cm.

The first terminal 51 and the first middle portion 41b of the first electric wire 41 are aligned in a first direction X. The second terminal 52 and the second middle portion 42b of the second electric wire 42 are also aligned in the first direction X. The third terminal 53 and the third middle portion 43b of the third electric wire 43 are also aligned in the first direction X. As shown in FIG. 2, the first middle portion 41b of the first electric wire 41, the second middle portion 42b of the second electric wire 42, and the third middle portion 43b of the third electric wire 43 are aligned in a second direction Y perpendicular to the first direction X. The third middle portion 43b of the third electric wire 43 is located between the first middle portion 41b of the first electric wire 41 and the second middle portion 42b of the second electric wire 42.

The first terminal 51, the second terminal 52 and the third terminal 53 are formed of a conductive material such as a metal material or the like. The first terminal 51, the second terminal 52 and the third terminal 53 are aligned in the second direction Y. The third terminal 53 is located between the first terminal 51 and the second terminal 52. As shown in FIG. 3, a direction perpendicular to the first direction X and the second direction Y will be referred to as a third direction Z. Size LY of the first terminal 51 in the second direction Y is shorter than size LZ of the first terminal 51 in the third direction Z. The first terminal 51 is formed to be like a thin plate. The second terminal 52 and the third terminal 53 each have substantially the same structure as that of the first terminal 51. It should be noted that there is no specific limitation on the structure of the first terminal 51, the second terminal 52 or the third terminal 53.

FIG. 4 is a perspective view of the connector 55. The connector 55 is formed of an insulating material such as a resin or the like. The connector 55 has a first insertion opening 56, a second insertion opening 57 and a third insertion opening 58 formed therein, and the first insertion opening 56, the second insertion opening 57 and the third insertion opening 58 are each opened in the first direction X. The first insertion opening 56, the second insertion opening 57 and the third insertion opening 58 are aligned in the second direction Y. The third insertion opening 58 is located between the first insertion opening 56 and the second insertion opening 57. The first terminal 51 is inserted into the first insertion opening 56, the second terminal 52 is inserted into the second insertion opening 57, and the third terminal 53 is inserted into the third insertion opening 58. The connector 55 has a connection opening 59 formed therein, and the connection opening 59 is opened in an opposite direction XB opposite to the first direction X. The connector 55A of the wire harness 90 (see FIG. 2) is connected with the connection opening 59.

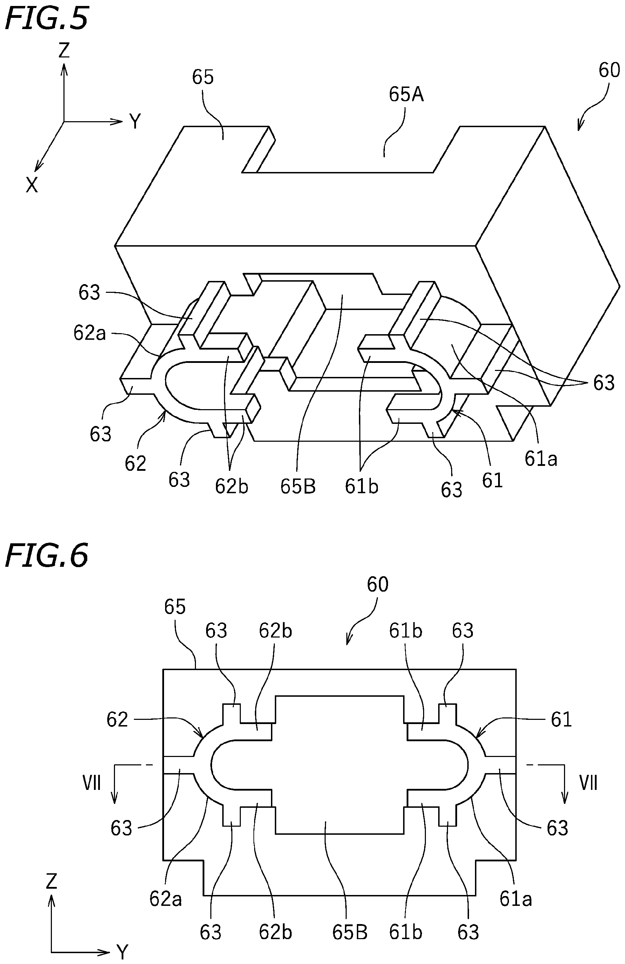

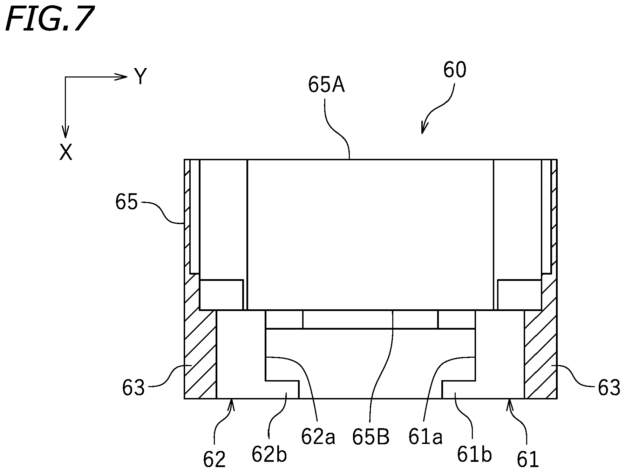

FIG. 5 is a perspective view of the cover 60. FIG. 6 is a plan view of the cover 60, and is a view of the cover 60 as seen in the direction opposite to the first direction X. FIG. 7 is a cross-sectional view of FIG. 6 taken along line VII-VII in FIG. 6. There is no specific limitation on the material of the cover 60. In this embodiment, the cover 60 is formed of a resin. The cover 60 includes a cover main body 65 fit to the connector 55, and a first electric wire guide 61 and a second electric wire guide 62 provided on the cover main body 65.

There is no specific limitation on the shape of the cover main body 65. In this embodiment, the cover main body 65 is formed to be substantially box-like. The cover main body 65 has an opening 65A and an opening 65B formed therein. The connector 55 is inserted into the opening 65A, and the opening 65B is opened in the first direction X.

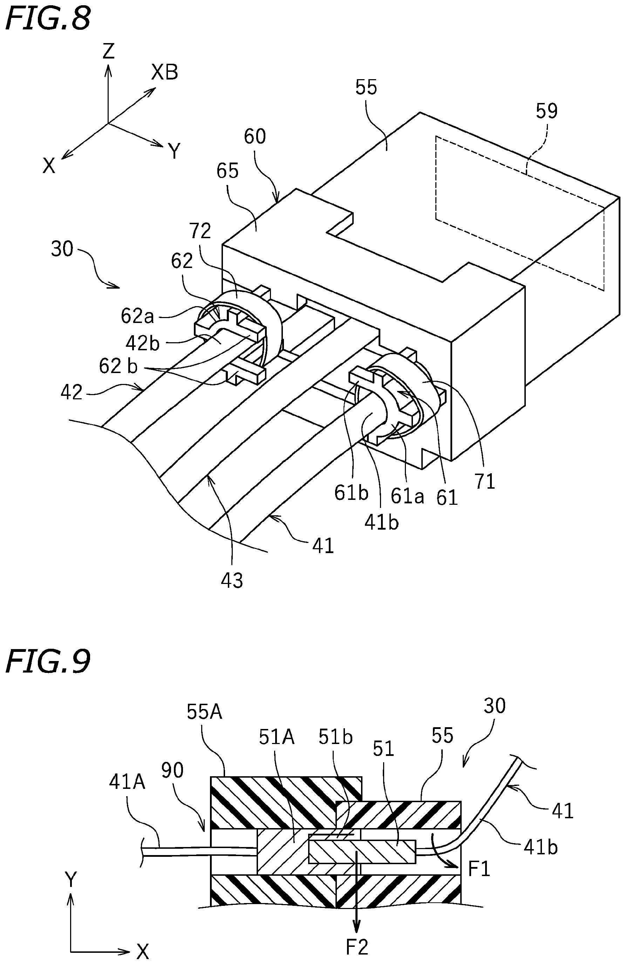

The first electric wire guide 61 guides the first middle portion 41b of the first electric wire 41 such that the first middle portion 41b extends in the first direction X. The first electric wire guide 61 is configured to suppress movement of the first middle portion 41b of the first electric wire 41 in the second direction Y perpendicular to the first direction X. The first electric wire guide 61 is located further in the first direction X than the first insertion opening 56 of the connector 55. The first electric wire guide 61 extends in the first direction X from a perimeter of the opening 65B of the cover main body 65. The first electric wire guide 61 includes a semicylindrical guide main body 61a and a pair of bars 61b extending in the second direction Y from an end, in the first direction X, of the guide main body 61a. The pair of bars 61b are aligned in the third direction Z. As shown in FIG. 8, the first middle portion 41b of the first electric wire 41 is supported by the guide main body 61a and the bars 61b to be guided in the first direction X.

The second electric wire guide 62 guides the second middle portion 42b of the second electric wire 42 such that the second middle portion 42b extends in the first direction X. The second electric wire guide 62 is located further in the first direction X than the second insertion opening 57 of the connector 55. The second electric wire guide 62 has substantially the same structure as that of the first electric wire guide 61. In more detail, the second electric wire guide 62 extends in the first direction X from the perimeter of the opening 65B of the cover main body 65. The second electric wire guide 62 includes a semicylindrical guide main body 62a and a pair of bars 62b extending in the second direction Y from an end, in the first direction X, of the guide main body 62a. The pair of bars 62b are aligned in the third direction Z. As shown in FIG. 8, the second middle portion 42b of the second electric wire 42 is supported by the guide main body 62a and the bars 62b to be guided in the first direction X.

As shown in FIG. 5, the first electric wire guide 61 includes ribs 63. The ribs 63 are provided on the guide main body 61a of the first electric wire guide 61, and protrude outward in a diametric direction of the guide main body 61a. There is no specific limitation on the number of the ribs 63. Herein, the first electric wire guide 61 includes three ribs 63. The second electric wire guide 62 also includes three ribs 63. The ribs 63 are provided on the guide main body 62a of the second electric wire guide 62, and protrude outward in a diametric direction of the guide main body 62a.

The above-described structure of the cover 60 is merely an example. There is no specific limitation on the structure of the cover 60.

As described above, the cover 60 is fit to the connector 55. As shown in FIG. 8, the first electric wire 41 extends in the first direction X from the first insertion opening 56 (see FIG. 4) of the connector 55 through the cover 60. The second electric wire 42 extends in the first direction X from the second insertion opening 57 of the connector 55 through the cover 60. The third electric wire 43 extends in the first direction X from the third insertion opening 58 of the connector 55 through the cover 60.

The first electric wire guide 61 and the first middle portion 41b of the first electric wire 41 are adjacent to each other in the second direction Y. The first middle portion 41b of the first electric wire 41 is inserted between the pair of bars 61b of the first electric wire guide 61. The first middle portion 41b of the first electric wire 41 is secured to the first electric wire guide 61 by a first band 71. In more detail, the first band 71 is wound around the guide main body 61a of the first electric wire guide 61 and the first middle portion 41b of the first electric wire 41. This prevents the first middle portion 41b of the first electric wire 41 from being significantly bent. The first electric wire guide 61 prevents the first middle portion 41b of the first electric wire 41 from being significantly shifted from the first direction X.

Similarly, the second electric wire guide 62 and the second middle portion 42b of the second electric wire 42 are adjacent to each other in the second direction Y. The second middle portion 42b of the second electric wire 42 is inserted between the pair of bars 62b of the second electric wire guide 62. The second middle portion 42b of the second electric wire 42 is secured to the second electric wire guide 62 by a second band 72. In more detail, the second band 72 is wound around the guide main body 62a of the second electric wire guide 62 and the second middle portion 42b of the second electric wire 42. This prevents the second middle portion 42b of the second electric wire 42 from being significantly bent. The second electric wire guide 62 prevents the second middle portion 42b of the second electric wire 42 from being significantly shifted from the first direction X.

As shown in FIG. 2, when the connector 55 and the connector 55A are connected with each other, the first terminal 51 is put into contact with the terminal 51A of the wire harness 90, the second terminal 52 is put into contact with the terminal 52A of the wire harness 90, and the third terminal 53 is put into contact with the terminal 53A of the wire harness 90. As a result, the wire harness 30 and the wire harness 90 are connected with each other. The motor 21 is connected with the controller 20 via the wire harness 30 and the wire harness 90. Electric power is supplied from the controller 20 to the motor 21 via the wire harness 90 and the wire harness 30.

In this embodiment, the first terminal 51 is a male terminal, and the terminal 51A (another terminal) is a female terminal. As shown in FIG. 9, the first terminal 51 overlaps the terminal 51A, connected therewith via the connection opening 59 (see FIG. 8), in the direction perpendicular to the first direction X, and thus is electrically connected with the terminal 51A. In this embodiment, the terminal 51A includes a folded leaf spring portion 51b. The leaf spring portion 51b exerts a spring force and presses the first terminal 51 in the direction perpendicular to the first direction.

The first electric wire 41 of the wire harness 30 may possibly be sharply bent in the case where the power supply circuit 25 is located at a certain position. In the case where as shown in, for example, FIG. 9, the first electric wire 41 is sharply bent, a restoring force F1 is generated in the first electric wire 41 to restore the electric wire 41 to be straight. If the cover 60 is not provided, the first terminal 51 receives a force F2 in the direction perpendicular to the first direction X from the first electric wire 41. As a result, the contact pressure received by the first terminal 51 from the terminal 51A of the wire harness 90 may possibly be increased or decreased locally. Particularly in the case where the wire harness 30 vibrates while the motorcycle 1 is running, the contact pressure on the first terminal 51 may possibly become excessive or insufficient.

However, according to this embodiment, the cover 60 including the first electric wire guide 61 is attached to the connector 55. As shown in FIG. 10, the first middle portion 41b of the first electric wire 41 is supported by the first electric wire guide 61 and guided to extend in the first direction X. The first electric wire guide 61 prevents or suppresses the bending of the first middle portion 41b. Therefore, even though the restoring force F1 is generated in the first electric wire 41, the force F2 received by the first terminal 51 from the first electric wire 41 becomes zero or is decreased. Therefore, the contact pressure on the first terminal 51 is kept favorable.

The same is applicable to the second electric wire 42 and the second terminal 52 although a detailed description thereof will be omitted. The second electric wire guide 62 guides the second middle portion 42b of the second electric wire 42 such that the second middle portion 42b extends in the first direction X. Therefore, the contact pressure on the second terminal 52 is kept favorable.

As described above, according to the wire harness 30 in this embodiment, even if the first electric wire 41 is sharply bent in the vicinity of the connector 55, the first middle portion 41b, of the first electric wire 41, contiguous to the first tip portion 41a is guided by the first electric wire guide 61 to extend in the first direction X. Therefore, the first terminal 51 crimped to the first tip portion 41a is unlikely to receive a force in the direction perpendicular to the first direction X from the first electric wire 41. This allows the contact pressure received by the first terminal 51 from the terminal 51A of the wire harness 90 to be kept favorable. Similarly, the second electric wire guide 62 guides the second middle portion 42b of the second electric wire 42. This allows the contact pressure received by the second terminal 52 from the terminal 52A of the wire harness 90 to be kept favorable. Therefore, the wire harness 30 maintains a favorable connection with the another wire harness 90 even while the motorcycle 1 is running. According to the wire harness 30 in this embodiment, the bending of the first electric wire 41 and the second electric wire 42 in the vicinity of the connector 55 is tolerated. Therefore, there is little need to restrict the position where the wire harness 30 may be installed.

According to this embodiment, the first middle portion 41b of the first electric wire 41 is secured to the first electric wire guide 61 by the first band 71. The first middle portion 41b is firmly secured to the first electric wire guide 61. Therefore, the fluctuation of the contact pressure on the first terminal 51 is further suppressed. The second middle portion 42b of the second electric wire 42 is secured to the second electric wire guide 62 by the second band 72. The second middle portion 42b is firmly secured to the second electric wire guide 62. Therefore, the fluctuation of the contact pressure on the second terminal 52 is further suppressed.

According to this embodiment, the first electric wire guide 61 includes the guide main body 61a, and the guide main body 61a has an arc-shaped cross-section taken along the direction perpendicular to the first direction X. The guide main body 61a is formed to have a semicylindrical shape extending in the first direction X. Therefore, a contact area of the guide main body 61a with the first middle portion 41b of the first electric wire 41 is enlarged. The first electric wire guide 61 includes the guide main body 61a, and therefore, guides the first middle portion 41b of the first electric wire 41 favorably. Similarly, the second electric wire guide 62 includes the guide main body 62a, and therefore, guides the second middle portion 42b of the second electric wire 42 favorably.

According to this embodiment, the guide main body 61a of the first electric wire guide 61 and the guide main body 62a of the second electric wire guide 62 each have the ribs 63 provided thereon. The ribs 63 increase the rigidity of the first electric wire guide 61 and the second electric wire guide 62. Therefore, the first electric wire guide 61 guides the first middle portion 41b of the first electric wire 41 favorably, and the second electric wire guide 62 guides the second middle portion 42b of the second electric wire 42 favorably.

As shown in FIG. 3, size LY of the first terminal 51 in the second direction Y is shorter than size LZ of the first terminal 51 in the third direction Z. There is a tendency that when the first terminal 51 receives a force in the second direction Y, the contact pressure received by the first terminal 51 from the terminal 51A of the wire harness 90 becomes excessive or insufficient. However, according to this embodiment, the force in the second direction Y applied to the first middle portion 41b of the first electric wire 41 is received by the first electric wire guide 61. Therefore, the first terminal 51 is unlikely to receive the force in the second direction Y. This allows the contact pressure on the first terminal 51 to be kept favorable.

The cover 60 including the first electric wire guide 61 and the second electric wire guide 62 may be integrated with the connector 55. In this embodiment, the cover 60 is separate from the connector 55. Attaching the cover 60 to the connector 55 results in the first electric wire guide 61 and the second electric wire guide 62 being located at appropriate positions.

One embodiment of the vehicle wire harness and the straddled vehicle including the same has been described. The above-described embodiment is merely an example, and various other embodiments may be carried out.

In the above-described embodiment, the cover 60 is attached to the connector 55 but not to the connector 55A. Needless to say, substantially the same cover 60 may be attached to the connector 55A.

In the above-described embodiment, the terminal 51A includes the leaf spring portion 51b providing the first terminal 51 with a pressing force in the direction perpendicular to the first direction X. The leaf spring portion 51b may be omitted.

In the above-described embodiment, the first terminal 51 is a male terminal and the terminal 51A is a female terminal. The first terminal 51 of the wire harness 30 is not limited to a male terminal and may be a female terminal. The first terminal 51 may be a female terminal and the terminal 51A may be a male terminal. The first terminal 51 may include the leaf spring portion 51b providing the terminal 51A with a pressing force in the direction perpendicular to the first direction X. The first terminal 51 and the terminal 51A do not need to be shaped to be fit to each other. The first terminal 51 and the terminal 51A may each have any other shape that allows the first terminal 51 and the terminal 51A to be electrically connected with each other when overlapping each other in the direction perpendicular to the first direction X.

In the above-described embodiment, the wire harness 30 is included in the power supply circuit 25. There is no specific limitation on the position where the wire harness 30 is installed. The wire harness 30 may be included in, for example, an electric circuit connecting the controller and a driving source for running to each other, an electric circuit connecting the controller and an actuator to each other, or an electric circuit connecting the controller and a sensor to each other.

In the above-described embodiment, the first middle portion 41b of the first electric wire 41 and the first electric wire guide 61 are secured to each other by the first band 71. The member securing the first middle portion 41b and the first electric wire guide 61 to each other is not limited to the first band 71. The second middle portion 42b of the second electric wire 42 and the second electric wire guide 62 are secured to each other by the second band 72. The member securing the second middle portion 42b and the second electric wire guide 62 to each other is not limited to the second band 72. There is no absolute need of a member securing the first middle portion 41b and the first electric wire guide 61 to each other, and such a member may be omitted as long as the first electric wire guide 61 guides the first middle portion 41b. Similarly, there is no absolute need of a member securing the second middle portion 42b and the second electric wire guide 62 to each other, and such a member may be omitted as long as the second electric wire guide 62 guides the second middle portion 42b.

There is no specific limitation on the shape or the size of the ribs 63 of the first electric wire guide 61 and the second electric wire guide 62. The number of the ribs 63 of each of the first electric wire guide 61 and the second electric wire guide 62 is not limited to three. The rib(s) 63 may be provided in the number of one, two, or four or more. There is no absolute need of the rib(s) 63, and the rib(s) 63 may be omitted.

The direction in which the first electric wire guide 61 and the first middle portion 41b of the first electric wire 41 are adjacent to each other merely needs to be perpendicular to the first direction X, and is not limited to the second direction Y. The direction in which the second electric wire guide 62 and the second middle portion 42b of the second electric wire 42 are adjacent to each other merely needs to be perpendicular to the first direction X, and is not limited to the second direction Y.

The cover 60 may include another electric wire guide that guides the third middle portion 43b of the third electric wire 43 such that the third middle portion 43b extends in the first direction X. The cover 60 does not need to include both of the first electric wire guide 61 and the second electric wire guide 62. The cover 60 may include either the first electric wire guide 61 or the second electric wire guide 62 in accordance with the position where the wire harness 30 is installed.

The wire harness includes various types of electric wires connecting electric components. The wire harness includes a so-called sub lead.

The straddled vehicle is a vehicle on which a rider rides while straddling. The straddled vehicle is not limited to a motorcycle 1. The straddled vehicle may be, for example, a three-wheeled motorized vehicle, an ATV (All Terrain vehicle), or a snowmobile. The wire harness 30 may be included in a straddled vehicle other than the motorcycle 1. Alternatively, the wire harness 30 may be included in a vehicle other than the straddled vehicle.

The terms and expressions used herein are for description only and are not to be interpreted in a limited sense. These terms and expressions should be recognized as not excluding any equivalents to the elements shown and described herein and as allowing any modification encompassed in the scope of the claims. The present invention may be embodied in many various forms. This disclosure should be regarded as providing preferred embodiments of the principle of the present invention. These preferred embodiments are provided with the understanding that they are not intended to limit the present invention to the preferred embodiments described in the specification and/or shown in the drawings. The present invention is not limited to the preferred embodiment described herein. The present invention encompasses any of preferred embodiments including equivalent elements, modifications, deletions, combinations, improvements and/or alterations which can be recognized by a person of ordinary skill in the art based on the disclosure. The elements of each claim should be interpreted broadly based on the terms used in the claim, and should not be limited to any of the preferred embodiments described in this specification or used during the prosecution of the present application.

### (Reference Signs List)

1 ... motorcycle (straddled vehicle); 20 ... controller; 21 ... motor; 25 ... power supply circuit; 30 ... wire harness (vehicle wire harness); 41 ... first electric wire; 41a ... first tip portion; 41b ... first middle portion; 42 ... second electric wire; 42a ... second tip portion; 42b ... second middle portion; 51 ... first terminal; 52 ... second terminal; 55 ... connector; 56 ... first insertion opening; 57 ... second insertion opening; 60 ... cover; 61 ... first electric wire guide; 61a ... guide main body; 62 ... second electric wire guide; 63 ... rib; 71 ... first band; X ... first direction; Y ... second direction; Z ... third direction

## Claims

1. A vehicle wire harness (30), comprising:
a first terminal (51);
a first electric wire (41) including a first tip portion (41a) having the first terminal (51) crimped thereto and a first middle portion (41b) contiguous to the first tip portion (41a) ;
a connector (55) having a first insertion opening (56) opened in a first direction (X) formed therein, and having the first terminal (51) inserted thereto; and
a first electric wire guide (61) located further in the first direction (X) than the first insertion opening (56) of the connector (55), the first electric wire guide (61) guiding the first middle portion (41b) of the first electric wire (41) such that the first middle portion (41b) extends in the first direction (X).

2. The vehicle wire harness (30) according to claim 1, wherein:
the connector (55) has a connection opening (59), opened in an opposite direction (XB) opposite to the first direction (X), formed therein, and
the first terminal (51) is configured to overlap another terminal (51A) connected thereto via the connection opening (59), the first terminal (51) overlapping the another terminal (51A) in a second direction (Y) perpendicular to the first direction (X).

3. The vehicle wire harness (30) according to claim 2, wherein the first electric wire guide (61) is configured to suppress movement of the first middle portion (41b) of the first electric wire (41) in the second direction (Y).

4. The vehicle wire harness (30) according to claim 1, wherein:
the connector (55) has a connection opening (59), opened in an opposite direction (XB) opposite to the first direction (X), formed therein, and
the first terminal (51) includes a leaf spring portion (51b) providing another terminal (51A), connected thereto via the connection opening (59), with a pressing force in a direction (Y) perpendicular to the first direction (X).

5. The vehicle wire harness (30) according to any one of claims 1 to 4, wherein
the vehicle wire harness (30) further comprises a first band (71) securing the first middle portion (41b) of the first electric wire (41) to the first electric wire guide (61);
and/or
the first electric wire guide (61) includes a portion (61a) having an arc-shaped cross-section taken along a direction perpendicular to the first direction (X) or a semicylindrical portion (61a) extending in the first direction (X) .

6. The vehicle wire harness (30) according to any one of claims 1 to 5, wherein
the first electric wire guide (61) includes a guide main body (61a) supporting the first middle portion (41b) of the first electric wire (41), and one or a plurality of ribs (63) provided on the guide main body (61a) and extending in the first direction (X);
and/or
size (LY) of the first terminal (51) in a second direction (Y) perpendicular to the first direction (X) is shorter than size (LZ) of the first terminal (51) in a third direction (Z) perpendicular to the first direction (X) and the second direction (Y), and the first electric wire guide (61) and the first middle portion (41b) of the first electric wire (41) are adjacent to each other in the second direction (Y).

7. The vehicle wire harness (30) according to any one of claims 1 to 6, wherein:
the connector (55) has a second insertion opening (57) opened in the first direction (X) formed therein,
the vehicle wire harness (30) further includes:
a second terminal (52) inserted into the second insertion opening (57),
a second electric wire (42) including a second tip portion (42a) having the second terminal (52) crimped thereto and a second middle portion (42b) contiguous to the second tip portion (42a), and
a second electric wire guide (62) located further in the first direction (X) than the second insertion opening (57) of the connector (55), the second electric wire guide (62) guiding the second middle portion (42b) of the second electric wire (42) such that the second middle portion (42b) extends in the first direction (X),
the first electric wire guide (61) and the first middle portion (41b) of the first electric wire (41) are adjacent to each other in a second direction (Y) perpendicular to the first direction (X), and
the second electric wire guide (62) and the second middle portion (42b) of the second electric wire (42) are adjacent to each other in the second direction (Y).

8. The vehicle wire harness (30) according to any one of claims 1 to 7, comprising a cover (60) including the first electric wire guide (61), the cover (60) being separate from the connector (55),
wherein the cover (60) is attached to the connector (55) .

9. The vehicle wire harness (30) according to claim 7, comprising a cover (60) including the first electric wire guide (61) and the second electric wire guide (62), the cover (60) being separate from the connector (55),
wherein the cover (60) is attached to the connector (55) .

10. The vehicle wire harness (30) according to any one of claims 1 to 9, wherein the first electric wire (41) has an outer diameter of 3 to 6 mm.

11. A straddled vehicle (1), comprising the vehicle wire harness (30) according to any one of claims 1 to 10.

12. A straddled vehicle (1), comprising:
the vehicle wire harness (30) according to any one of claims 1 to 10; and
another vehicle wire harness (90) including another terminal (51A), another electric wire (41A) having the another terminal (51A) crimped thereto, and another connector (55A) having the another terminal (51A) inserted thereto,
wherein:
the connector (55) has a connection opening (59), opened in an opposite direction (XB) opposite to the first direction (X), formed therein,
the another terminal (51A) is connected with the first terminal (51) via the connection opening (59) by the connector (55) and the another connector (55A) being connected with each other, and
the first terminal (51) and the another terminal (51A) overlap each other in a second direction (Y) perpendicular to the first direction (X).

13. The straddled vehicle (1) according to claim 12, wherein the first electric wire guide (61) is configured to suppress movement of the first middle portion (41b) of the first electric wire (41) in the second direction (Y).

14. The straddled vehicle (1) according to any one of claims 11 to 13, further comprising:
a controller (20),
a motor (21), and
a power supply circuit (25) connecting the controller (20) and the motor (21) to each other,
wherein the vehicle wire harness (30) is included in the power supply circuit (25).

15. The straddled vehicle (1) according to any one of claims 11 to 14, wherein the straddled vehicle (1) is a motorcycle.
